# EUROPÄISCHE PATENTSCHRIFT

(11) **EP 0 231 783 B1**
(45) Veröffentlichungstag und Bekanntmachung des Hinweises auf die Patenterteilung: **24.02.1993**
(21) Anmeldenummer: 87100482.6
(22) Anmeldetag: 16.01.1987
(51) Int. Cl.: F16K 17/14, F16K 47/00, A62C 37/36, F16K 1/20

(54) **Schnellöffnungsventil, insbesondere für Feuerlöscher**
Quick opening valve, especially for fire extinguishers
Vanne à ouverture rapide, en particulier pour les extincteurs d'incendie

(30) Priorität: 24.01.1986 DE 3602056; 19.12.1986 DE 3643451
(43) Veröffentlichungstag der Anmeldung: 12.08.1987
(73) Patentinhaber: Total Walther Feuerschutz GmbH, 51069 Köln (DE)
(72) Erfinder: Kadel, Werner, D-6943 Birkenau (DE); Kötter, Karl, D-5064 Rösrath (DE); Bonk, Hans, D-5060 Bergisch-Gladbach 2 (DE)

(56) Entgegenhaltungen:
- DE-A- 864 497
- DE-A- 2 222 427
- DE-A- 3 322 543
- FR-A- 2 345 643
- GB-A- 2 056 624
- US-A- 2 454 072
- US-A- 3 074 421
- US-A- 3 474 809
- US-A- 3 664 775
- US-A- 4 556 083

## Beschreibung

Die Erfindung betrifft ein Schnellöffnungsventil, insbesondere für Feuerlöscher, mit einer im Strömungskanal des Ventilgehäuses vorgesehenen Dichtmembran, die über einen Ring eingespannt und von einer Klappe unterstützt ist, die einerseits mittels eines Scharniers und andererseits mittels eines Verschlußelementes abgestützt ist, wobei innerhalb des Ventilgehäuses zum Abfangen der Klappe ein Pufferelement vorgesehen ist.

Derartige Schnellöffnungsventile sind als Austrittsventile für Feuerlöscher oder Feuerlöschbehälter bekannt, wobei derartige Ventile über einen längeren Zeitraum unter erschwerten Bedingungen verwendbar sein müssen.

Bei einem derart bekannten Schnellöffnungsventil (DE-A-33 22 543) ist die die Dichtmembran unterstützende Klappe einerseits in einem Bolzendrehgelenk gelagert und andererseits von einem Kipphebel gestützt. Des weiteren besteht die Dichtmembran bei dem Ventil aus einer berstbaren, scheibenförmigen Metallmembran. Diese Metallmembran ist einerseits absolut dicht, reißt aber andererseits in große Stücke, wenn das Ventil geöffnet wird, wobei die Metallteile von der Strömung mitgeführt werden und folglich in Handlöschern nicht einsetzbar sind. Diese Metallteile haben eine Geschoßwirkung und können zu Leitung- und Personenschäden führen. Bei Pulverlöschern wird die nachgeschaltete Düse durch diese Metallteile verstopft bzw. beschädigt. Außerdem wird die Pulververteilung durch die Metallteile beeinträchtigt. Metallmembranen haben den weiteren Nachteil, daß sie eine zusätzliche Dichtung erfordern. Zwischen dem Membranring und der Stützklappe ist aus fertigungstechnischen Gründen ein axialer Spalt vorhanden. Dieser Spalt kann mit einer Metallmembran nicht elastisch überbrückt werden. Die Lagerungen für die Stützklappe und das Verschlußelement sind als Bolzenlager ausgeführt. Derartige Bolzenlagerungen rosten nach längerer Zeit ein, so daß sie sich nicht mehr einwandfrei bewegen lassen. Damit wird ein schnelles Öffnen derartiger Ventile verhindert. Beim Öffnen des Ventils reißt der Druck des Feuerlöschmittels die Membran auseinander und öffnet die Stützplatte, die am Ende ihrer schnellen Bewegung auf ein Dämpfungselement auftrifft. Dieses elastische Element führt zum Flattern bzw. zum Einschwingen der Klappe und stört damit eine einwandfreie Strömung des Löschmittels. Außerdem wird die von der aufprallenden Stützklappe erzeugte Schlagkraft auf das Ventilgehäuse übertragen und kann dort zu Beschädigungen führen.

Bei einem weiteren bekannten Ventil (US-A-3,474,809), ist eine Verschlußklappe einerseits fest mit dem Ventilkörper verbunden und andererseits in einem Bolzendrehgelenk gelagert. Über einen Schlagbolzen wird die Ventilklappe von außen abgesprengt. Dazu sind große Kräfte erforderlich, die auch auf den Bolzen der Klappenlagerung einwirken. Dadurch kann sich der Bolzen verbiegen, der ein vollständiges und damit einwandfreies Öffnen des Ventiles unmöglich macht. Auch hier kann das Bolzengelenk auf Dauer einrosten, wodurch ein einwandfreies Öffnen der Ventilklappe gestört wird. Wird die Ventilklappe nicht vollständig geöffnet, ist kein vollständiger Querschnitt freigegeben und das Löschmittel kann nicht einwandfrei strömen.

Bei einem Klappenventil (DE-A 22 22 427) ist die Klappe an einem Rahmen mittels eines flexiblen Scharnierstreifens befestigt, der aus Kunststoff besteht. Aufgrund des flexiblen Scharnierstreifens schwingt die Klappe bei geöffnetem Ventil hin und her, womit ein geregelter Fluß des Löschmittels nicht gegeben ist. Bei größeren Drücken reißt der Scharnierstreifen ab. Die anmeldungsgemäßen Schnellöffnungsventile arbeiten mit einem Druck bis 100 bar und mehr. Bei diesen großen Drücken reißt der flexible Scharnierstreifen ab, so daß dieses bekannte Klappenventil für Schnellöffnungsventile nicht geeignet ist.

Schnellöffnungsventile sind in Eckbauweise bekannt, d. h. der Strömungskanal verläuft in einem Winkel. Demzufolge muß die Strömung umgelenkt werden. Das als Kolben ausgebildete Verschlußelement dieser Ventile wird während des Öffnungsvorganges translativ in Strömungsrichtung bewegt.

Auch ist ein Schnellöffnungsventil mit eingespannter und unterstützter Verschlußmembran bekannt, bei dem die Öffnung des Strömungskanals durch ein definiertes Wegdrehen des Verschlußelementes erfolgt, was durch eine lokale Deformation der Membran im Stegbereich ermöglicht wird.

Das Membraninnenteil bleibt über den Steg mit dem Membranaußenteil stoffschlüssig verbunden.

Die bekannten Ventile haben alle den Nachteil, daß sie im geöffneten Zustand keinen ungestörten Strömungsquerschnitt aufweisen.

Schnellöffnungsventile mit unter hohem Druck stehenden Löschmitteln finden dort Anwendung, wo - bezogen auf das Ventilöffnungssignal - innerhalb kurzer Zeit, z. B. im Millisekundenbereich, ein definierter Mindestmassendurchsatz erzielt werden soll.

Ausgehend von einem Ventil nach der DE-A 33 22 543 liegt der Erfindung die Aufgabe zugrunde, mit einfachsten Mitteln ein Schnellöffnungsventil mit klappenunterstützter Dichtmembran zu schaffen, das bei schnellgeöffnetem Ventil aufgrund des Betriebsdruckes ohne Beschädigung des Ventilgehäuses eine ungestörte, umlenkungsfreie Ventildurchströmung jederzeit ermöglicht.

Diese Aufgabe wird dadurch gelöst, daß die Dichtmembran aus Kunststoff besteht und im Berührungsbereich von Klappe und Ring durch einen Verstärkungsring gestützt ist, wobei das Verschlußelement als quer zum Strömungskanal verstellbarer Entriegelungskolben ausgebildet ist und daß das Scharnier und das Pufferelement plastisch verformbare Elemente sind.

Mit einem derartigen Ventil ist eine schnelle Öffnung im Millisekundenbereich jederzeit gewährleistet, ohne die absolute Dichtung zu beeinträchtigen.

Aufgrund der zuätzlich gestützten Kunststoffmembran und des verschiebbaren Entriegelungskolbens ist eine schnelle definierte Öffnungsbewegung der Stützklappe durch die gewollte Deformation des Scharnieres erreicht.

Weitere Erfindungsgedanken sind in den Unteransprüchen gekennzeichnet.

Das erfindungsgemäße Ventil hat bei geöffnetem Strömungskanal eine vorgegebene, ungestörte Durchströmungsrichtung, wobei die Funktion des Abdichtens durch die Kunststoffmembran mit der zusätzlichen Unterstützung optimal erfüllt ist. Die Druckkräfte des zurückgehaltenen Löschmediums führen bei geschlossenem Ventil nicht zur Zerstörung der Kunststoffmembran, weil diese vollflächig durch die Klappe, den Membranring und den Stützring abgestützt ist.

Die bei geschlossenem Ventil durch einen Entriegelungskolben unterstützte Klappe wird zum Öffnen des Ventils dadurch abgeklappt, daß ein elektrisches Signal auf einen Druckgasgenerator gegeben und dabei der Kolben aufgrund einer pyrotechnischen Entladung schnell bewegt wird. Durch die Gaserzeugung des gezündeten Druckgasgenerators findet in einer Verdichtungskammer ein Druckaufbau statt. Der Entriegelungskolben wird in Bewegung gesetzt und gibt die Klappe frei, wobei das Scharnier abgebogen wird. Nach der Klappenentriegelung bewirken die Druckkräfte des zurückgehaltenen Mediums das Beschleunigen der Klappe und die Zerstörung der Membran. Die Klappe selbst wird plastisch aufgefangen, so daß keine Schwingungsbewegungen eintreten. Die Ventilkonstruktion ermöglicht damit eine gradlinige Duchströmung ohne Querschnittseinschränkung.

Dichtmembran, Scharnier und Druckgasgenerator sind Bauteile, die nach der Ventilbetätigung sowie der Herstellung des Ventilausgangszustandes erneuert werden müssen. Der Verschlußkolben ist für mehrere Ventilbetätigungen verwendbar.

Die Kunststoffmembran gewährleistet nicht nur eine schnellere Öffnungszeit bei sicherer Abdichtung durch Überbrückung der Axialspalte, sondern kann sich auch Verformungen anpassen, die aufgrund der hohen Betriebsdrücke entstehen bzw. die aufgrund von Herstellungsungenauigkeiten gegeben sind. Es ist bei einem Betriebsdruck von 100 bar nicht ausgeschlossen, daß sich die Unterstützungsklappe durchbiegt. Eine Kunststoffmembran kann sich dieser Form ohne Beschädigung anpassen. Eine Metallmembran ist hierzu nicht fähig. Ein weiterer Vorteil der erfindungsgemäß vorgesehenen Kunststoffmembran ist darin zu sehen, daß bei falscher Montage und hoher Druckbeaufschlagung der Membran keine Gefahr besteht. So kann beispielsweise die Unterstützungsklappe irrtümlicherweise nicht eingebaut sein. Wird jetzt das Ventil mit hohem Druck beaufschlagt, dann wird die nicht unterstützte Kunststoffmembran bei einem Druck von 3 bar zerreißen. Würde das gleiche bei einer Metallmembran geschehen, dann wird die Membran erst bei ca. 40 bar zerreißen. Bei diesem Druck sind jedoch weitere Schäden, insbesondere Personenschäden, nicht auszuschließen. Auch der verschiebbare Verriegelungskolben hat gegenüber den drehbaren Verriegelungen einen großen Vorteil. Aufgrund des kurzen Hubes ist ein sicheres und schnelles Öffnen gewährleistet, da die Öffnungskraft so gewählt werden kann, daß Reibungskräfte sicher überwunden werden. Bei einem drehbar gelagerten Verriegelungselement können die Öffnungskräfte einseitig wirken, so daß das Verriegelungselement verklemmt und sich dadurch nicht mehr öffnen läßt. Damit kann ein verschiebbarer Verriegelungskolben höhere Kräfte aufnehmen als ein drehbares Verriegelungselement.

Ein Ausführungsbeispiel der Erfindung ist in der Zeichnung dargestellt und wird nachfolgend näher beschrieben. Es zeigt:
- Fig. 1: einen Längsschnitt durch das Ventil,

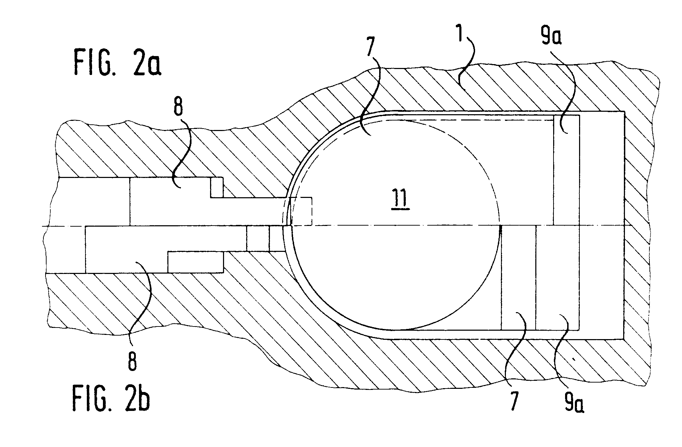

- Fig. 2: einen Querschnitt durch das Ventil, wobei der obere Halbschnitt 2a das Ventil mit einer Kolben- und Scharnierstellung bei geschlossenem Ventil und der untere Halbschnitt 2b das Ventil mit einer Kolben- und Scharnierstellung bei geöffnetem Ventil zeigt,
- Fig. 3: eine weitere Klappen-Scharnier-Verbindung in geschlossener Ventilstellung,
- Fig. 4: die Klappen-Scharnier-Verbindung nach Fig. 3 in geöffneter Ventilstellung,
- Fig. 5 - 7: weitere Ausgestaltungen des Scharnierbleches,
- Fig. 8 -10: weitere Ausgestaltungen der Membran.

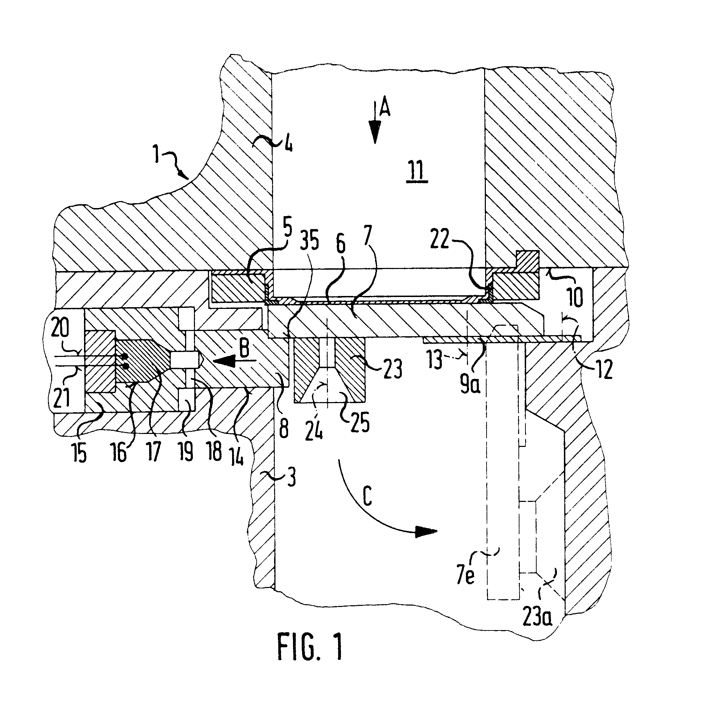

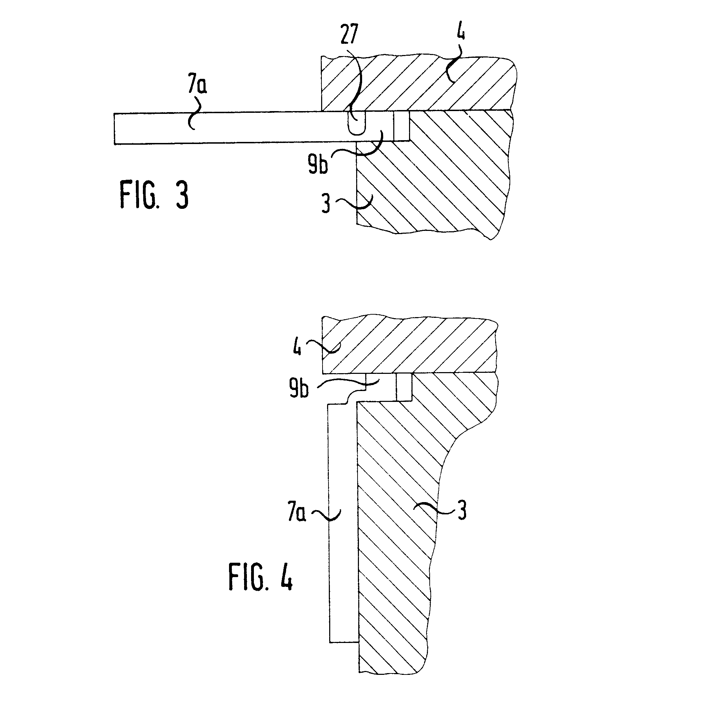

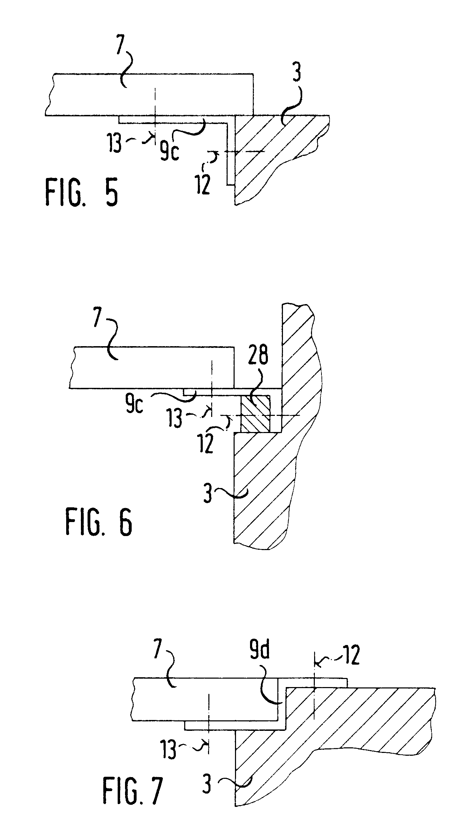

Zwischen den beiden Ventilteilen 3 und 4 des Gehäuses 1 befindet sich ein Membranring 5, der eine Membran 6 im äußeren Bereich befestigt. Unterhalb der Membran 6 befindet sich eine Klappe 7, die einerseits von einem Kolben 8 mit einer, die Auflagefläche vergrößernden Ausnehmung 35 und andererseits von einem Scharnier abgestützt wird. Das Scharnier ist im äußeren Bereich in einer Ausnehmung 10 des Gehäuseteiles 3 abgestützt und ragt mit dem anderen Teil frei in den Strömungskanal 11 des Ventilgehäuses 1 hinein. Das Scharnier ist gemäß Fig. 1 als Scharnierblech 9a ausgebildet und einerseits mittels Schrauben 12 mit dem Ventilteil 3 und andererseits mittels Schrauben 13 mit der Klappe 7 fest verbunden. Der Kolben 8 ist quer zur Strömungsrichtung des Löschmittels gemäß Pfeil "A" bewegbar und in einer Bohrung 14 des Gehäuseteils 3 untergebracht. In seiner rückwärtigen Verlängerung ist der Kolben 8 mit einem Kolbenansatz 15 und einer zentralen Bohrung 16 versehen, in der ein Druckgasgenerator 17 angeordnet ist, der über Kanäle 18 mit einer Expansionskammer 19 verbunden ist. Das aufgrund einer über Zündleitungen 20 und 21 eingeleiteten elektrischen Zündung austretende Druckgas vergrößert den Raum der Kammer 19 und bewegt damit den Kolben 8 in Richtung des Pfeiles "B". Damit wird die durch den Kolben 8 bedingte Unterstützung der Klappe 7 freigegeben, so daß sich diese in Richtung des Pfeiles "C" bewegen kann. Damit entfällt auch die Unterstützung der Membran 6, die aufgrund des oberhalb der Membran befindlichen Druckes des Löschmittels zerstört wird und damit der gesamte Druck auf die Klappe 7 einwirkt. Demzufolge wird das Scharnierblech 9a bei einer plastischen Verformung nach unten gebogen und in die gestrichelte Lage 7e gebracht. Das Scharnier und die Klappe 7 können auch als eine Einheit ausgebildet sein, so wie es Fig. 3 zeigt. In diesem Falle ist die Klappe 7a und das Scharnierblech 9b über eine Sollbiegestelle 27 miteinander verbunden. Bei der Öffnung des Ventils biegt sich die Klappe 7a plastisch nach unten in eine Stellung, wie es Fig. 4 zeigt.

In den Fig. 5 - 7 sind weitere Ausgestaltungen des Scharnierbleches 9 dargestellt, wobei das Blech winkelförmig 9c oder Z-förmig 9d ausgebildet sein kann. Die Befestigung ist wiederrum mittels der Schrauben 12 und 13 am Gehäuseteil 3, bzw. an der Klappe 7 vorgesehen. Nach Fig. 6 ist noch ein Distanzring 28 vorgesehen.

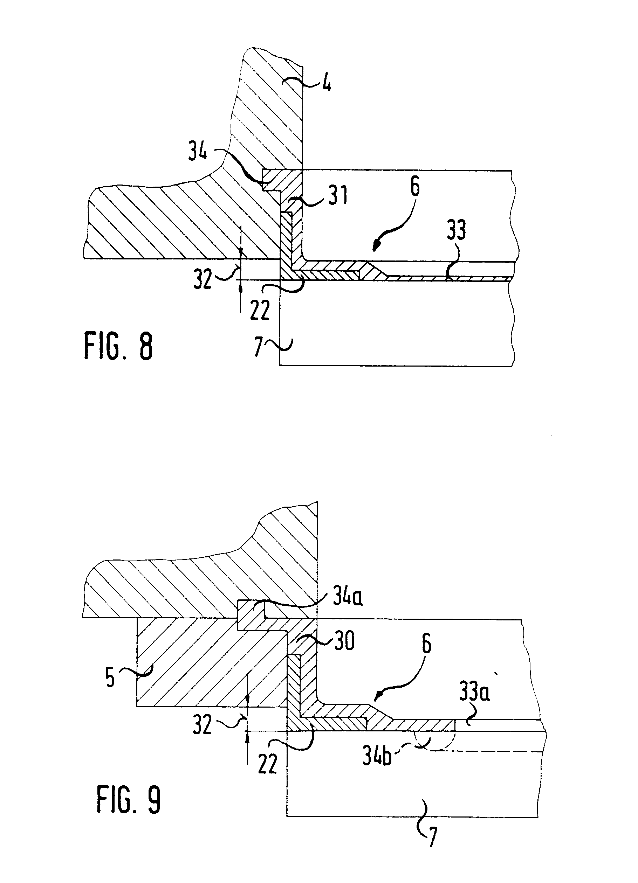

Erfindungsgemäß besteht die Dichtmembran 6 aus Kunststoff, wodurch sich das Ventil leichter und schneller öffenen läßt. Kunststoff hat nicht die Stabilität wie Metall. Aus diesem Grunde ist erfindungsgemäß ein Verstärkungsring 22 im äußeren Bereich der Membran 6 zwischen dieser und der Klappe 7 vorgesehen. Die Dichtmembran 6 übernimmt die Abdichtung zwischen Membranring 5 und Ventilgehäuse 1 und auch zwischen Membranring 5 und Stützklappe 7. Aufgrund elastischer Eigenschaften der Kunststoffmatrix kann der sich ergebende axiale Spalt 32 zwischen dem Membranring 5 und der Stützklappe 7 überbrückt werden. Der Verstärkungsring 22 wird bei höheren Drücken, im Membranring verschiebbar, so angeordnet, daß die Membran 6 auf der Stützklappe 7 anliegt, weil es vom elastischen Material durch den Löschmitteldruck angepreßt wird. Hierdurch werden fertigungs- oder montagebedingte Spalte minimiert und ein Fließen des Kunststoffmaterials verhindert. Die Dichtmembran 6 und der Verstärkungs 22 können ein- oder mehrteilig sein. So zeigt Fig. 8 einen L-förmigen Profilring 31 mit einer oberen Wulst 34, die in einer nicht näher bezeichneten Ausnehmung des Ventilteiles 4 eingebracht ist. Der innere Teil der Membran 6 besteht aus einer Folie 33. Die Teile 31/34 und 33 können aus einem Teil bestehen, wobei der Verstärkungsring 22 anvulkanisiert ist. Im Betriebsfall wird der Verstärkungsring 22 im Membranring 5 formschlüssig zurückgehalten. Die aus Elastomerwerkstoff bestehende Membran 6 wird an der Verbindungsstelle des Profiles 31 und der Folie 33 ausgeschnitten bzw. zerstört und von der Strömung mitgerissen. Da die eigentliche Abdichtung über den äußeren Profilring 31 im Boden dieser topfartigen Ausgestaltung erfolgt, kann das Material in der Membranmitte minimiert werden bzw. aus einer dünneren Folie bestehen.

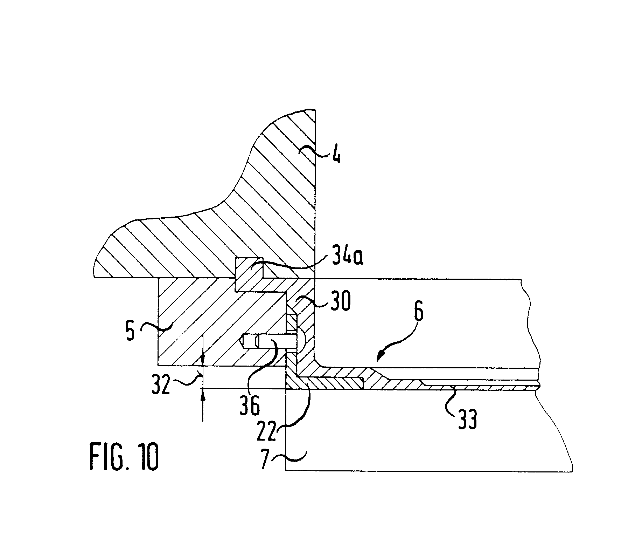

Der mittlere Teil 33a der Membran 6 kann gemäß Fig. 9 die gleiche Stärke wie der Z-förmige Profilring 30 aufweisen. Auch bei einem L-förmigen Profilring ist die gleiche Stärke denkbar. Außerdem kann auch eine untere Wulst 34b vorgesehen sein, die in einer Ausnehmung der Klappe 7 sitzt. Sind der Membran-Profilring 30 bzw. 31 und der Verstärkungsring 22 zweiteilig ausgebildet, dann kann der Verstärkungsring 22, wie in Fig. 10 gezeigt, mittels Befestigungsorganen 36 mit dem Ventilgehäuse 4, bzw. mit dem Membranring 5 verbunden sein.

Bei Öffnung des Ventils wird die Stützklappe 7 zuerst beschleunigt und dann aufgrund des Pufferelementes 23 abgebremst. Die Verzögerungsenergie wird vom Ventilgehäuseteil 3 aufgenommen. Zum Schutz des Gehäuseteiles wird ein Teil der Energie durch das oder durch mehrere Pufferelemente 23 aufgenommen. Die Pufferelemente 23 werden bei der Abbremsung der Stützklappe 7 plastisch deformiert. Diese Deformierung wird unterstützt, wenn der eine axiale Bohrung 24 für die Befestigungselemente 26 aufweisende zylindrische Puffer nach außen hin konisch erweitert ist, wie mit 25 dargestellt. Die Deformierung ist in Fig. 1 mit 23a gestrichelt dargestellt. Es gehört zum Wesen der Erfindung, den Puffer 23 am Gehäuseteil 3 zu befestigen.

## Patentansprüche

1. Schnellöffnungsventil, insbesondere für Feuerlöscher, mit einer in einem Strömungskanal (11) eines Ventilgehäuses (1) vorgesehenen Dichtmembran (6), die über einen Ring (5) eingespannt und von einer Klappe (7) unterstützt ist, die einerseits mittels eines Scharniers und andererseits mittels eines Verschlußelementes abgestützt ist, wobei innerhalb des Ventilgehäuses zum Abfangen der Klappe ein Pufferelement (23) vorgesehen ist, dadurch gekennzeichnet, daß die Dichtmembran (6) aus Kunststoff besteht und im Berührungsbereich von Klappe (7) und Ring (5) durch einen Verstärkungsring (22) gestützt ist, wobei das Verschlußelement als quer zum Strömungskanal (11) verstellbarer Entriegelungskolben (8) ausgebildet ist, und daß das Scharnier und das Pufferelement (23) plastisch verformbare Elemente sind.

2. Ventil nach Anspruch 1, dadurch gekennzeichnet, daß das Scharnier als kragarmige Scheibe (9a) ausgebildet, frei in den Strömungskanal (11) des Gehäuses (1) hineinragt und mit Klappe (7) und einem Gehäuseteil (3) des Ventilgehäuses verbunden ist.

3. Ventil nach Anspruch 1, dadurch gekennzeichnet, daß das Scharnier als Scheibe (9b) ausgebildet ist, die mit der Klappe (7a) über eine Sollbiegestelle eine Einheit bildet.

4. Ventil nach Anspruch 2 oder 3, dadurch gekennzeichnet, daß die Scharnierscheibe winkel- (9c) oder Z-förmig (9d) ausgebildet ist.

5. Ventil nach Anspruch 1, dadurch gekennzeichnet, daß die Dichtmembran (6) und der Verstärkungsring (22) einteilig ausgebildet sind.

6. Ventil nach Anspruch 1, dadurch gekennzeichnet, daß der Rand (29) der Dichtmembran (6) ein Z- (30) oder L-förmiges (31) Ringprofil aufweist.

7. Ventil nach Anspruch 6, dadurch gekennzeichnet, daß die Dichtmembran aus dem Ringprofil (30,31) und einer zentralen Folie (33) besteht.

8. Ventil nach einem der Ansprüche oder den Ansprüchen 5 bis 7, dadurch gekennzeichnet, daS das Ringprofil (30,31) im oberen und/oder unteren Bereich eine Verstärkungswulst (34 bzw. 34 a) aufweist.

9. Ventil nach Anspruch 1 oder 2, dadurch gekennzeichnet, daß das plastisch verformbare Pufferelement (23) unterhalb der Klappe (7) an dieser bzw. am Gehäuseteil (3) befestigt ist.

10. Ventil nach Anspruch 9, dadurch gekennzeichnet, daß das Pufferelement (23) zylinderförmig ausgebildet und mit einer Stirnfläche an der Klappe (7) befestigt ist.

11. Ventil nach den Ansprüchen 9 und 10, dadurch gekennzeichnet, daß das zylinderförmige Pufferelement (23) eine axiale Bohrung (24) aufweist, die zur freien Stirnfläche hin kegelförmig (25) erweitert ist.

12. Ventil nach Anspruch 1, dadurch gekennzeichnet, daß dem Entriegelungskolben (8) eine Expansionskammer (19) mit einem Druckgasgenerator (16) zugeordnet ist.

13. Ventil nach Anspruch 12, dadurch gekennzeichnet, daß der Druckgasgenerator (16) von außen elektrisch zündbar ist.

14. Ventil nach Anspruch 1, dadurch gekennzeichnet, daß der Entriegelungskolben (8) mittels einer pneumatischen Aussteuerung bewegbar ist.

15. Ventil nach Anspruch 1, dadurch gekennzeichnet, daß der Entriegelungskolben (8) zur Vergrößerung der Auflagefläche mit einer Ausnehmung (35) als Auflage für die Klappe (7) versehen ist.

## Claims

1. Quick-opening valve, in particular for fire extinguishers, having a sealing membrane (6) which is provided in a flow channel (11) of a valve housing (1) and which is clamped by way of a ring (5) and is supported by a flap (7) which, on the one hand, is stayed by means of a hinge and, on the other hand, is stayed by means of a closing element, with a buffer element (23) being provided within the valve housing to catch the flap, characterised in that the sealing membrane (6) is made of plastics material and in the contact region of flap (7) and ring (5) is borne by a reinforcing ring (22), with the closing element being formed as an unlocking piston (8) which can be adjusted transversely to the flow channel (11) and in that the hinge and the buffer element (23) are plastically deformable elements.

2. Valve according to claim 1, characterised in that the hinge is formed as a cantilever plate (9a), projects freely into the flow channel (11) of the housing (1) and is connected with flap (7) and a housing portion (3) of the valve housing.

3. Valve according to claim 1, characterised in that the hinge is formed as a plate (9b) which via a predetermined bending point forms a unit with the flap (7a).

4. Valve according to claim 2 or 3, characterised in that the hinge plate is formed in an angular (9c) or Z-shaped (9d) manner.

5. Valve according to claim 1, characterised in that the sealing membrane (6) and the reinforcing ring (22) are formed in one piece.

6. Valve according to claim 1, characterised in that the edge (29) of the sealing membrane (6) has a Z-shaped (30) or L-shaped (31) annular profile.

7. Valve according to claim 6, characterised in that the sealing membrane consists of the annular profile (30, 31) and a central foil (33).

8. Valve according to one of the claims or the claims 5 to 7, characterised in that in the upper and/or lower region the annular profile (30, 31) has a reinforcement bead (34 or 34a respectively).

9. Valve according to claim 1 or 2, characterised in that the plastically deformabie buffer element (23) is secured below the flap (7) to the latter or to the housing portion (3) respectively.

10. Valve according to claim 9, characterised in that the buffer element (23) is formed in a cylindrical manner and is secured with one face to the flap (7).

11. Valve according to claims 9 and 10, characterised in that the cylindrical buffer element (23) has an axial bore (24) which is extended towards the free face in a conical manner (25).

12. Valve according to claim 1, characterised in that associated with the unlocking piston (8) there is an expansion chamber (19) with a pressure gas generator (16).

13. Valve according to claim 12, characterised in that the pressure gas generator (16) can be ignited electrically from outside.

14. Valve according to claim 1, characterised in that the unlocking piston (8) can be moved by means of a pneumatic control.

15. Valve according to claim 1, characterised in that the unlocking piston (8), for the purpose of enlarging the bearing surface, is provided with a recess (35) as a bearing for the flap (7).

## Revendications

1. Vanne à ouverture rapide, notamment pour extincteur d'incendie, comportant une membrane (6) d'étanchéité prévue dans un canal (11) d'écoulement d'un corps (1) de vanne, membrane qui est encastrée par l'intermédiaire d'un anneau (5) et qui est soutenue par un clapet (7), soutenu d'une part à l'aide d'une charnière et d'autre part à l'aide d'un élément d'obturation, le corps de la vanne comportant, pour arrêter le clapet, un élément tampon (23), vanne caractérisée en ce que la membrane (6) d'étanchéité consiste en une matière plastique et s'appuie, dans la zone de contact du clapet (7) et de l'anneau (5), sur un anneau (22) de renforcement et de soutien, l'élément d'obturation étant réalisé sous forme d'un piston (8) de déverrouillage déplaçable et réglable transversalement au canal (11) d'écoulement, et en ce que la charnière et l'élément tampon (23) sont des éléments capables d'une déformation plastique.

2. Vanne selon la revendication 1, caractérisée en ce que la charnière est réalisée sous forme d'un disque (9a) du type à bras en porte-à-faux, cette charnière pénètre librement dans le canal (11) d'écoulement ménagé dans le corps (1) et est reliée au clapet (7) et à une partie (3) du corps de la vanne.

3. Vanne selon la revendication 1, caractérisée en ce que la charnière est sous forme de disque (9b), qui forme une unité avec le clapet (7a) en passant par une position de flexion obligée.

4. Vanne selon la revendication 2 ou 3, caractérisée en ce que le disque-charnière est en forme de coin ou d'angle (20c) ou en forme de Z (9d).

5. Vanne selon la revendication 1, caractérisée en ce que la membrane (6) d'étanchéité et l'anneau (22) de support de renforcement sont réalisés en un ensemble monobloc.

6. Vanne selon la revendication 1, caractérisée en ce que le bord (29) de la membrane (6) d'étanchéité présente un élément profilé annulaire en forme de Z (30) ou de L (31).

7. Vanne selon la revendication 6, caractérisée en ce que la membrane d'étanchéité consiste en le profilé annulaire (30, 31) et en une feuille centrale (33).

8. Vanne selon l'une des revendications ou les revendications 5 à 7, caractérisée en ce que l'élément profilé annulaire (30, 31) présente, dans sa zone supérieure et/ou dans sa zone inférieure,un bourrelet (34 ou 34a) de renforcement.

9. Vanne selon la revendication 1 ou 2, caractérisée en ce que l'élément tampon (23) capable d'une déformation plastique est fixé au-dessous du clapet (7), sur celui-ci ou sur une partie (3) du corps de la vanne.

10. Vanne selon la revendication 9, caractérisée en ce que l'élément tampon (23) est de forme cylindrique et est fixé par une surface frontale au clapet (7).

11. Vanne selon la revendication 9 et 10, caractérisée en ce que l'élément tampon (23) de forme cylindrique présente un perçage (24) axial,qui est élargi en forme de cône (25) vers la surface frontale libre.

12. Vanne selon la revendication 1, caractérisée en ce que le piston (8) de déverrouillage est associé à une chambre (19) d'expansion comportant un générateur (16) de gaz sous pression.

13. Vanne selon la revendication 12, caractérisée en ce que le générateur (16) de gaz sous pression peut être allumé électriquement de l'extérieur.

14. Vanne selon la revendication 1, caractérisée en ce que le piston (8) de déverrouillage peut être déplacé à l'aide d'une commande pneumatique.

15. Vanne selon la revendication 1, caractérisée en ce que le piston (8) de déverrouillage comporte, pour agrandir la surface d'appui, un évidement (35) constituant une surface d'appui pour le clapet (7).
